# EUROPÄISCHE PATENTSCHRIFT

(11) **EP 0 854 313 B1**
(45) Veröffentlichungstag und Bekanntmachung des Hinweises auf die Patenterteilung: **05.04.2000**
(21) Anmeldenummer: 97122726.9
(22) Anmeldetag: 23.12.1997
(51) Int. Cl.: F16L 19/02, F02M 55/02

(54) **Doppelkegel-Kupplungs-Nippel einer Stahlrohrleitung**
Double taper coupling nipple for a steel pipe
Raccord avec un nipple formant double cône pour un tuyau en acier

(30) Priorität: 17.01.1997 DE 19701561
(43) Veröffentlichungstag der Anmeldung: 22.07.1998
(73) Patentinhaber: DaimlerChrysler AG, 70567 Stuttgart (DE); Siebe Automotive (Deutschland) GmbH, 89601 Schelklingen (DE)
(72) Erfinder: Fleckenstein, Günter, 73732 Esslingen (DE); Schmitz, Thomas, 71409 Schwaikheim (DE); Meyer, Manfred, 73734 Esslingen (DE); Moosbrugger, Siegbert, 72525 Münsingen (DE)

(56) Entgegenhaltungen:
- DE-C- 3 801 703
- US-A- 2 150 524
- US-A- 4 665 876
- US-A- 4 679 828
- US-A- 5 120 084

## Beschreibung

Die Erfindung betrifft einen Doppelkegel-Kupplungs-Nippel einer Stahlrohrleitung, der durch Kaltumformen eines Endbereiches dieser Rohrleitung erzeugt ist, nach dem Oberbegriff des Patentanspruchs 1.

Ein derartiger Nippel ist aus DE 3801703 C1 bekannt. Dieser bekannte Nippel ist an ein relativ dickwandiges Stahlrohr angeformt und kann dadurch nur mit einem relativ geringen Verformungsgrad erzeugt werden. Dadurch ist bei jenem Nippel keine besonders hohe Festigkeit erzielbar. Eine hohe Festigkeit des Stahlmaterials im Nippelbereich wird dort auch nicht angestrebt, da das zu einem Nippel kalt umgeformte Stahlmaterial lediglich ein ST 30 AL-Werkstoff ist. Damit liegt die maximal erreichbare Zugfestigkeit dort im Nippelbereich lediglich bei etwa 500 - 600 N/mm².

Zur Erzielung einer guten Dichtung soll die als Dichtfläche dienende Kegelfläche bei der bekannten Ausführung plastisch verformbar sein, wozu zumindest der Dichtflächenbereich des Nippels wenigstens in einer geringen Oberflächentiefe weich geglüht ist. Durch die weichgeglühte Zone im Dichtflächenbereich ist jener bekannte Nippel kerbrißempfindlich, wenn er mit einem hohen Drehmoment einer Überwurfschraube angezogen wird.

Hiervon ausgehend beschäftigt sich die Erfindung mit dem Problem, einen gattungsgemäßen Nippel mit höherer Festigkeit zu schaffen, der mit einem extrem hohen Anzugdrehmoment mit einer Überwurfschraube an einem Gegenstück befestigt werden kann.

Einen gattungsgemäßen Doppelkegel-Kupplungs-Nippel, bei dem die vorstehend genannte Problematik beherrscht wird, zeigt eine Ausführung nach den kennzeichnenden Merkmalen des Patentanspruchs 1 auf.

Die Erfindung beruht auf dem Gedanken, den Nippel-Bereich festigkeits- und härtemäßig mit besonders hohen Werten auszulegen und eine materialmäßige Nachgiebigkeit in die angrenzenden Gegenstücke zu verlegen. Darüber hinaus wird die bei der Dichtfläche des Nippels fehlende plastische Verformbarkeit durch eine geringfügige elastische Verformbarkeit in diesem Bereich ersetzt. Diese elastische Verformbarkeit wird durch die Form der kegelförmigen Dichtfläche des Nippels erreicht, indem diese Dichtfläche mit einem relativ großen Kegelwinkel ausgebildet wird. Ein großer Kegelwinkel führt dazu, daß die Kegelfläche praktisch bis an den Innendurchmesser des Leitungsrohres heranreicht, so daß der Dichtbereich direkt an den Rohrinnenumfang gelegt werden kann. Durch die dort bei einem großen Kegelwinkel gegebene geringe Materialanhäufung entsteht eine geringfügige die Dichtwirkung verbessernde Elastizität der Nippel-Dichtfläche.

Zweckmäßige Ausgestaltungen der Erfindung sind Gegenstand der Unteransprüche.

Durch die erfindungsgemäße Ausbildung des DoppelkegelKupplungs-Nippels ist ein extrem hohes Anzugsdrehmoment für die Überwurfschraube möglich, ohne daß es zu Kerbrissen an dem verschraubten Nippel kommt. Durch eine auf diese Weise erzielbare feste und sichere Verschraubung des Nippels, durch die auch bei einer hohen Schwing- und Biegebeanspruchung der Überwurfschraube keine Rißgefährdung besteht, können gefahrlos Fremdteile an der Überwurfschraube befestigt werden.

Eine besonders rationelle Befestigungsart ergibt sich durch das Vorsehen eines axialen Außengewindes auf dem von dem Nippel entfernt liegenden Ende der Überwurfschraube. Auf dieses Außengewinde kann eine Mutter aufgezogen werden, mit der Fremdteile an der Überwurfschraube einfach verspannt werden können.

Ein Ausführungsbeispiel der Erfindung ist in der Zeichnung dargestellt.

Es zeigen
- Fig. 1: einen Schnitt durch das Ende einer Stahlrohrleitung mit einem angeformten Doppelkegel-Kupplungs-Nippel,
- Fig. 2: einen Schnitt durch ein über einen Kupplungs-Nippel in einem Gegenstück befestigtes Stahlrohr.

Der Doppelkegel-Kupplungs-Nippel 1 ist bei dem Ausführungsbeispiel durch Kaltumformen an ein relativ dünnwandiges Stahlrohr angeformt.

Die Dichtkegelfläche besitzt einen Kegelwinkel α von etwa 115°.

Das Stahlrohr 2 ist aus dem Material ST 52, bei welchem durch das Kaltumformen des Doppelkegel-Nippels 1 eine Festigkeitssteigerung von 500 N/mm² im Ausgangszustand auf ca. 800 bis 850 N/mm² nach dem Anstauchvorgang erreicht wird.

Das Stahlrohr 2 mit der vorgegebenen dünnen Wanddicke läßt im Nippelbereich eine Verdickung der Wandung in einer sehr harmonischen Form auf die nahezu doppelte Dicke des Ausgangs zustandes realisieren. Hierdurch ist der Nippel 1 in der Lage, sehr hohe Belastungen zu ertragen.

Durch den großen Kegelwinkel α der Dichtfläche des Nippels 1 reicht die Kegelfläche bis an den inneren Stahlrohrdurchmesser heran. Dadurch ergibt sich am Öffnungsrand ein in geringem Maße elastisch nachgiebiger Bereich der Dichtfläche, was wichtig für eine gute Abdichtung bei einem Nippel 1 aus sehr festem und hartem Material ist.

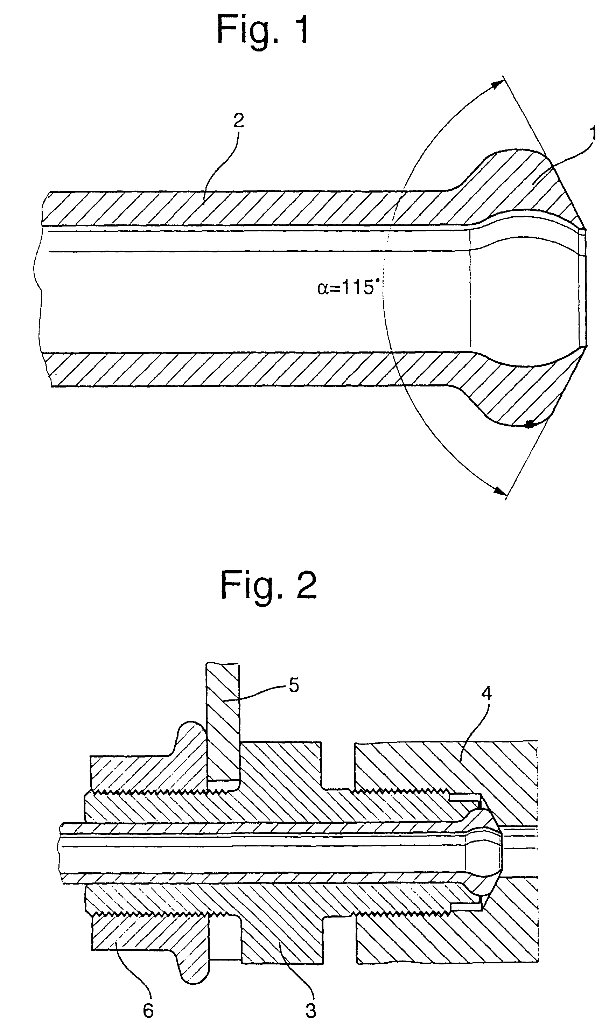

Bei dem in Fig. 2 dargestellten eingebauten Zustand einer Stahlrohrleitung 2 ist der Nippel 1 mit Hilfe einer Überwurfschraube 3 gegen ein Gegenstück 4 unter einem hohen Anzugdrehmoment verspannt.

Durch die feste und sichere erfindungsgemäße Verspannung des Stahlrohres 2 über den Nippel 1 mit der Überwurfschraube 3 kann die Überwurfschraube 3 als Halter für Fremdteile 5 dienen, ohne eine Rißgefährdung für die Nippelverbindung hervorzurufen. Die Befestigung des Fremdteiles 5 kann durch eine auf die Überwurfschraube 3 aufziehbare Mutter 6 erfolgen.

Der durch Kaltumformen angestauchte Nippel 1 ist nach dem Ausführungsbeispiel mit einer solchen Form versehen, daß zu seiner Fixierung an einem Gegenstück die Überwurfschraube 3 zumindest in ihrem an dem Nippel 1 anliegenden Bereich eine genormte Form aufweisen kann.

## Patentansprüche

1. Doppelkegel-Kupplungs-Nippel (1) einer Stahlrohrleitung (2), der durch Kaltumformen eines Endbereiches dieser Rohrleitung erzeugt ist, mit einer ersten eine Dichtfläche bildenden Kegelfläche zur stirnseitig dichten Anlage in einer auf diese erste Kegelfläche abgestimmten hohlkegelförmigen Wand eines Gegenstückes (4), gegen das dieser Nippel mittels einer an dem Gegenstück angreifenden sich an der zweiten Kegelfläche des Nippels abstützenden Überwurfschraube mit einem hohen Anzugsdrehmoment verschraubt ist,
**gekennzeichnet durch die Merkmale**
- die Stahlrohrleitung (2) ist dünnwandig und aus hochfestem Stahl ausgebildet,
- der Nippel (1) weist eine gegenüber dem übrigen Rohrleitungsbereich zumindest teilweise wenigstens etwa doppelte Wanddikke auf,
- die Stahlrohrleitung (2) ist einschließlich des gesamten Bereiches des Nippels (1) an keiner Stelle weich geglüht,
- die Anlageflächen des Nippels (1) sind materialmäßig härter als die Gegenanlageflächen,
- der Kegelwinkel α der Dichtfläche des Nippels (1) mißt über 100°.

2. Doppelkegel-Kupplungs-Nippel nach Anspruch 1,
**dadurch gekennzeichnet**,
daß das Leitungsrohr aus ST 52-Stahl besteht.

3. Doppelkegel-Kupplungs-Nippel nach Anspruch 1 oder 2,
**dadurch gekennzeichnet**,
daß durch die Materialumformung im Bereich des Nippels (1) eine Zugfestigkeit mit einem Wert von etwa 800 bis 850 N/mm² vorliegt, die um etwa 300 N/mm² höher als in den übrigen Rohrleitungsbereichen liegt.

4. Doppelkegel-Kupplungs-Nippel nach einem der vorhergehenden Ansprüche mit einer Überwurfschraube,
**dadurch gekennzeichnet**,
daß diese Überwurfschraube (3) als Halter für Fremdteile (5) ausgebildet ist.

5. Doppelkegel-Kupplungs-Nippel mit einer Überwurfschraube nach Anspruch 4,
**dadurch gekennzeichnet**,
daß die Überwurfschraube (3) an ihrem von dem an dem Nippel (1) zu liegen kommenden Ende entfernten Ende mit einem axial verlaufenden Außengewinde zur Aufnahme einer Befestigungs-Mutter (6) für das zu haltende Fremdteil (5) versehen ist.

## Claims

1. Double-cone coupling nipple (1) of a steel pipe (2) produced by cold forming of an end area of the said pipe, with a first conical surface forming a sealing surface which, at its end, forms a seal by resting in a hollow cone-shaped wall of a counter-component (4) shaped to match the said first conical surface, against which the said nipple is pressed by a capping screw with a high loosening torque which engages with the counter-component and presses against the second conical surface of the nipple,
**characterised in that**
- the steel pipe (2) is thin-walled and made from high-strength steel,
- the nipple (1) has, at least in part, a wall thickness at least about twice that of the remainder of the pipe,
- the steel pipe (2) is not soft-annealed at any point including the entire area of the nipple (1),
- the contact surfaces of the nipple (1) are, as a material, harder than the surfaces against which they rest,
- the cone angle α of the sealing surfaces of the nipple (1) measures more than 100°.

2. Double-cone coupling nipple according to Claim 1,
**characterised in that**
the pipe is made from steel ST 52.

3. Double-cone coupling nipple according to Claims 1 or 2,
**characterised in that**
by virtue of the deformation of the material in the area of the nipple (1) a tensile strength with a value approximately 800 to 850 N/mm² is produced, which is around 300 N/mm² higher than in the remainder of the pipe.

4. Double-cone coupling nipple according to any of the preceding claims, with a capping screw,
**characterised in that**
the said capping screw (3) is designed so that it can hold additional components (5).

5. Double-cone coupling nipple with a capping screw according to Claim 4,
**characterised in that**
at its end away from the end in contact with the nipple (1), the capping screw (3) is provided with an axially extending outer thread to receive a fixing nut (6) for holding the additional component (5).

## Revendications

1. Mamelon de raccord à double cône (1) appartenant à une conduite en tube d'acier (2), qui est produit par déformation à froid d'une région d'extrémité de cette conduite, comprenant une première surface conique formant une surface de joint étanche, destinée à s'appuyer à joint étanche en position frontale dans une paroi en forme de cône creux accordée à cette première surface conique, appartenant à un élément conjugué (4) contre laquelle ce mamelon est appliqué par vissage avec un grand couple de serrage au moyen d'une vis chapeau qui attaque l'élément conjugué et s'appuie contre la deuxième surface conique du mamelon,
caractérisée par les caractéristiques suivantes :
◆ la conduite en tube d'acier (2) est à paroi mince et faite d'acier à haute résistance,
◆ le mamelon (1) présente, du moins en partie, une épaisseur de paroi au moins à peu près double de celle de la région restante de la conduite en tube,
◆ la conduite en tube d'acier (2) n'est soumise à un recuit d'adoucissement en aucun endroit, y compris la totalité de la région du mamelon (1),
◆ les surfaces de contact du mamelon (1) sont d'une dureté de matière supérieure à celle des surfaces de contact conjuguées,
◆ l'angle de cône α de la surface de joint étanche du mamelon 1 est de plus de 100°.

2. Mamelon de raccord à double cône selon la revendication 1, caractérisé en ce que le tube de la conduite est composé d'acier ST 52.

3. Mamelon de raccord à double cône selon la revendication 1 ou 2, caractérisé en ce que, sous l'effet de la déformation de la matière dans la région du mamelon (1), il s'établit une résistance à la traction d'une valeur d'environ 800 à 850 N/mm², qui est supérieure d'environ 300 N/mm² à celle qui existe dans les autres régions de la conduite en tube.

4. Mamelon de raccord à double cône selon une des revendications précédentes, muni d'une vis chapeau, caractérisé en ce que cette vis chapeau (3) forme une monture pour des éléments étrangers (5).

5. Mamelon de raccord à double cône, muni d'une vis chapeau, selon la revendication 4, caractérisé en ce que la vis chapeau (3) est munie, à son extrémité éloignée de l'extrémité qui entre en contact avec le mamelon (1), d'un filetage extérieur s'étendant axialement, destiné à recevoir un écrou de fixation (3) pour l'élément étranger à retenir (5).
